# FASCICULE DE BREVET EUROPEEN

(11) **EP 1 491 750 B1**
(45) Date de publication et mention de la délivrance du brevet: **11.03.2009**
(21) Numéro de dépôt: 04300325.0
(22) Date de dépôt: 22.06.2004
(51) Int. Cl.: F02D 41/02, F02D 41/00, F02D 41/40

(54) **Procédé et dispositif de commande de régénération d'un filtre à particules catalytique**
Verfahren und Vorrichtung zur Regeneration eines katalytischen Partikelfilters
Method and apparatus for regenerating a catalytic particulate filter

(30) Priorité: 25.06.2003 FR 0307688
(43) Date de publication de la demande: 29.12.2004
(73) Titulaire: RENAULT S.A.S., 92100 Boulogne Billancourt (FR)
(72) Inventeur: Bergeris, Cédric, 45300 Engenville (FR); Wabinski, Guillaume, 91290 Arpajon (FR); Rondele, Sylvere, 91310 Leuville sur Orges (FR)

(56) Documents cités:
- EP-A- 1 174 612
- EP-A- 1 205 647
- EP-A- 1 314 875
- DE-A- 19 926 138
- FR-A- 2 827 907

## Description

La présente invention concerne un procédé de régénération d'un filtre à particules de véhicule automobile équipé d'un moteur à combustion, ainsi qu'un dispositif de commande de régénération associé.

L'hétérogénéité des processus de combustion dans les moteurs, en particulier dans les moteurs diesel, a pour effet de générer des particules de carbone, qui ne peuvent être brûlées efficacement dans le moteur. Cela se traduit par l'apparition, en sortie de la ligne d'échappement, de fumées noires, caractéristiques des moteurs diesel. Ce phénomène apparaît en particulier lors des phases de démarrage et lors de fortes accélérations. La présence d'un filtre à particules dans la ligne d'échappement du moteur permet de diminuer considérablement la quantité de particules, poussières et autres suies, émises dans l'atmosphère, et de satisfaire aux normes antipollution. Des dispositifs de régénération pilotés permettent de brûler périodiquement les particules piégées dans le filtre et d'éviter le colmatage de ce dernier. Cela est effectué en élevant la température au sein du filtre à particules jusqu'à une température de l'ordre de 600°C, température à partir de laquelle les particules de carbone retenues dans le filtre s'enflamment spontanément. Pour un filtre à particules catalytique, ie comprenant un dispositif catalytique, la température à atteindre est encore plus élevée, de l'ordre de 700°C.

Un dispositif catalytique, placé en amont du filtre à particules dans la ligne d'échappement du moteur, est le siège de réaction exothermiques qui provoquent un dégagement d'énergie thermique. Cette énergie thermique peut être évacuée par le flux de gaz d'échappement en provenance du moteur, transmise au lit de suies dont est chargé le filtre ou être transmise aux différents éléments entrant dans la constitution du filtre à particules, ou, de manière générale, du système de dépollution.

EP-A-1 205 647 décrit un procédé permettant de brûler des résidus de filtre à particules, dans lequel pour augmenter la température dans le catalyseur, on agit sur un certain nombre de paramètres dont l'introduction de charges électriques pour augmenter la charge du moteur.

Des dispositifs de diagnostic de l'état de fonctionnement du système de filtration provoquent généralement le déclenchement de la régénération lorsque la quantité de suies stockées dans le filtre à particules est telle que la régénération peut être effectuée dans des conditions parfaitement contrôlables.

Néanmoins, il est possible que dans des conditions de roulage très spécifiques, par exemple en environnement urbain, les conditions requises pour l'initiation de la régénération ne soient pas atteintes. En effet, la régénération du filtre à particules n'est possible que si la quantité d'énergie thermique traversant le filtre à particules est suffisante. Il est donc nécessaire d'avoir à la fois une température élevée des gaz d'échappement qui traversent le filtre à particules, et un débit de gaz faible pour la régénération dudit filtre. Le débit de gaz dépend du débit d'alimentation en air frais du moteur.

Afin d'augmenter la température des gaz d'échappement traversant le filtre à particules, on retarde l'injection principale de carburant d'un angle de rotation vilebrequin déterminé par rapport au point mort haut (PMH) du piston dans le cylindre, et dépendant du point de fonctionnement du moteur. Ainsi, une plus grande énergie thermique est dégagée. Ces fortes températures entraînent une diminution des propriétés lubrifiantes de l'huile, et provoquent une usure plus rapide du moteur pouvant engendrer à terme une casse du moteur. Cela est d'autant plus vrai pour le cas de filtres à particules catalytique, pour lesquels la température à atteindre est plus élevée que pour les filtres à particules classiques.

Pour des points de fonctionnement stabilisés du moteur, notamment à faible régime de rotation et faible charge, par exemple lors d'une phase de ralenti, le flux d'énergie thermique, dépendant du débit d'alimentation en air frais réglé pour atteindre une température suffisante pour régénérer le filtre, est faible. On entend par faible charge, une faible résistance au mouvement, c'est-à-dire un faible couple moteur et une faible vitesse. Ce faible flux thermique limite l'exploitation de l'exothermicité des réactions se déroulant dans le dispositif catalytique amont, et ne favorise pas le transfert d'énergie thermique du dispositif catalytique amont au filtre à particules.

Aussi, le but de l'invention est d'optimiser la gestion du débit d'alimentation en air frais, afin d'obtenir à la fois une forte température des gaz d'échappement, et un flux d'énergie thermique suffisant, pour régénérer le filtre à particules, notamment lors de roulages de type urbain.

Différents aspects, modes de réalisation et de mise en oeuvre de l'invention sont définis dans les revendications.

Le procédé, selon un aspect de l'invention, permet de régénérer un filtre à particules de véhicule automobile équipé d'un moteur à combustion, comprenant une injection de carburant retardée d'un angle de rotation du moteur fonction prédéterminée du point mort haut des pistons du moteur. Lors d'une phase de régénération du filtre à particules, pour un point de fonctionnement du moteur stable depuis au moins une durée prédéterminée, on asservit le débit d'alimentation en air frais du moteur sur une consigne variable prédéterminée du temps et dudit point de fonctionnement stabilisé.

Le fait d'utiliser une consigne variable permet d'optimiser la régénération du filtre à particules, particulièrement lors de roulages urbains.

Dans un mode de mise en oeuvre préféré, un point de fonctionnement est déterminé par des valeurs de paramètres comprenant le régime de rotation du moteur, le couple du moteur, la vitesse du véhicule, et la température des gaz d'admission du moteur.

Dans un mode de mise en oeuvre avantageux, on définit la stabilité d'un point de fonctionnement du moteur par des intervalles de valeurs associés auxdits paramètres comprenant le régime de rotation du moteur, le couple du moteur, la vitesse du véhicule, et la température des gaz d'admission du moteur.

Dans un mode de mise en oeuvre préféré, on stocke préalablement en mémoire une cartographie de consigne du débit d'alimentation en air frais du moteur comprenant, pour un ensemble de points de fonctionnement prédéterminés du moteur, une consigne du débit d'alimentation en air frais fonction du temps, et lesdits intervalles de valeurs associés auxdits paramètres comprenant le régime de rotation du moteur, le couple du moteur, la vitesse du véhicule, et la température des gaz d'admission du moteur.

Dans un mode de mise en oeuvre avantageux, pour un point de fonctionnement stable prédéterminé, la fonction donnant la valeur de consigne du débit d'alimentation en air frais en fonction du temps est une fonction continue périodique comprenant une alternance d'intervalles de temps avec des valeurs de débit d'alimentation en air frais supérieur à la valeur moyenne du débit sur la période, et des intervalles de temps avec des valeurs de débit d'alimentation en air frais inférieur à la valeur moyenne du débit sur la période.

Il y a alors alternance de moments où le débit d'alimentation en air frais est assez faible pour permettre un réchauffement des gaz par l'exothermicité des réactions se déroulant dans un dispositif catalytique en amont du filtre à particules, et de moments où le débit d'alimentation en air frais est assez élevé pour transporter les gaz précédemment réchauffés à travers le filtre et participer à sa régénération par combustion des particules.

Selon un aspect de l'invention, il est également proposé un dispositif de commande de régénération d'un filtre à particules de véhicule automobile, comprenant des moyens pour retarder une injection de carburant d'un angle de rotation vilebrequin fonction prédéterminée du point mort haut des pistons du moteur du véhicule, un dispositif catalytique placé sur la ligne d'échappement du moteur en amont du filtre à particules, un débitmètre mesurant le débit d'alimentation en air frais du moteur, un turbocompresseur et une unité de commande électronique comprenant des moyens de régulation du débit d'alimentation en air frais. Les moyens de régulation comprennent des moyens pour asservir le débit d'alimentation en air frais du moteur sur une consigne stockée en mémoire dans des moyens de stockage. La consigne de débit d'alimentation en air frais est une fonction prédéterminée du temps et dudit point de fonctionnement, un point de fonctionnement étant déterminé par des valeurs de paramètres comprenant le régime de rotation du moteur, le couple du moteur, la vitesse du véhicule, et la température des gaz d'admission du moteur.

Dans un mode de réalisation préféré, pour un point de fonctionnement stable, les moyens pour asservir le débit d'alimentation en air frais du moteur sur la consigne comprennent des moyens pour agir de manière périodique sur le turbocompresseur et alterner des intervalles de temps avec des valeurs de débit d'alimentation en air frais supérieur à la valeur moyenne du débit sur la période, et des intervalles de temps avec des valeurs de débit d'alimentation en air frais inférieur à la valeur moyenne du débit sur la période.

Cette alternance permet de réchauffer les gaz d'échappements par les réactions exothermiques du dispositif catalytique, puis de transférer ces gaz réchauffés à travers le filtre à particules qui vont participer à sa régénération par combustion des particules.

D'autres buts, caractéristiques et avantages de l'invention apparaîtront à la lecture de la description suivante, donnée à titre d'exemple non limitatif.

L'invention peut être appliquée à un moteur diesel à quatre cylindres, chaque cylindre étant associé à un dispositif d'injection de carburant. L'air frais pénétrant dans le répartiteur d'admission du moteur traverse au préalable un turbocompresseur comprenant un compresseur et une turbine montés sur un arbre commun. Les débits fournis par le compresseur et la turbine sont commandés par l'unité de commande électronique UCE.

L'air frais, prélevé à l'extérieur, traverse tout d'abord un filtre à air, puis un débitmètre, avant de pénétrer dans le compresseur. Le dispositif comprend un capteur pour mesurer la température d'admission des gaz dans le répartiteur d'admission. L'air comprimé issu du compresseur traverse un échangeur de chaleur qui permet de refroidir les gaz admis. En sortie de l'échangeur, l'air comprimé refroidi traverse une vanne à trois voies capable de réguler un débit de recirculation des gaz d'échappement avant de pénétrer dans le répartiteur d'admission.

Les gaz d'échappement issus du collecteur d'échappement, après combustion dans le moteur, sont dirigés en partie vers la vanne à trois voies, afin d'être en partie mis en recirculation après mélange dans l'air d'admission dirigé vers le répartiteur d'admission. L'autre partie des gaz d'échappement, est amenée sur la turbine afin d'entraîner le compresseur. A la sortie de la turbine, les gaz d'échappement, traversent un dispositif catalytique permettant de réduire les taux en hydrocarbures et en monoxyde de carbone des gaz d'échappement. Les gaz d'échappement traversent ensuite un filtre à particules avant d'être rejetés dans l'atmosphère par le pot d'échappement.

L'unité de commande électronique (UCE) reçoit différents signaux permettant le fonctionnement du dispositif de régénération de l'invention. L'unité de commande électronique reçoit en particulier un signal du capteur de température indiquant la valeur de la température d'admission des gaz. Le débit d'air frais, mesuré par le débitmètre, est amené sous la forme d'un signal à l'unité de commande électronique.

L'unité de commande électronique émet différents signaux permettant la gestion du fonctionnement du moteur ainsi que d'autres organes du véhicule. L'unité de commande électronique émet en particulier un signal de commande de pilotage de la vanne. L'unité de commande électronique régule la pression de suralimentation en agissant sur l'orientation d'ailettes internes du compresseur et/ou de la turbine. L'unité de commande électronique émet également, un signal de commande pour un régulateur du débit de carburant injecté dans le moteur par les différents dispositifs d'injection. A cet effet, le carburant provenant du réservoir du véhicule est amené à l'organe de régulation et le carburant est ensuite distribué aux différents injecteurs. L'unité de commande électronique reçoit en outre, un signal indiquant la valeur du régime de rotation du moteur et la valeur du couple du moteur. L'unité de commande électronique comprend également des moyens pour connaître la vitesse du véhicule.

L'unité de commande électronique comprend des moyens aptes à retarder une injection de carburant d'un angle de rotation vilebrequin, c'est-à-dire d'un angle de rotation du moteur, qui est une fonction prédéterminée du point mort haut des pistons du moteur du véhicule. L'unité de commande électronique comprend également des moyens de régulation du débit d'alimentation en air frais commandant le turbocompresseur, et des moyens de stockage permettant notamment de stocker une consigne de débit d'alimentation en air frais CD. Les moyens aptes à retarder une injection de carburant, les moyens de régulation et les moyens de stockage communiquent.

Pour un point de fonctionnement stabilisé du moteur, c'est-à-dire un point de fonctionnement stable depuis au moins une durée prédéterminée, les moyens de régulation du débit d'alimentation en air frais asservissent ledit débit d'alimentation en air frais sur une consigne variable CD prédéterminée du temps t et dudit point de fonctionnement du moteur, et stockée dans les moyens de stockage. Cet asservissement sur une consigne variable est effectué tant que le point de fonctionnement reste stable. Un point de fonctionnement du moteur est déterminé par des valeurs de paramètres comprenant le régime de rotation du moteur, le couple du moteur, et la température des gaz d'admission du moteur.

Selon un exemple, la consigne CD est prédéterminée, et dépend du point de fonctionnement du moteur et est variable dans le temps.

La consigne est, dans cet exemple, pour un point de fonctionnement du moteur, une fonction périodique du temps, de période T alternant des phases de débit d' alimentation en air frais faibles et élevées par rapport à la valeur moyenne sur une période T du débit d'alimentation en air frais. Sur un intervalle de temps séparant un instant t₀ et un instant t₁, la consigne est linéairement croissante, et sur un intervalle de temps séparant l'instant t₁ et l'instant t₀+T, la consigne est linéairement décroissante. La consigne varie entre deux valeurs CDmin et CDmax, et sa valeur moyenne sur une période vaut CDmoy. Sur la période séparant les instants t₀ et t₀+T, il existe deux instants t₂ et t₃ , avec t₂ antérieur à t₁ et t₃ postérieur à t₁ où la consigne est précisément égale à CDmoy. A l'instant t₁, la consigne de débit d'alimentation en air frais a la valeur CDmax. Cela se répète de manière périodique dans le temps. Il y a alors alternance d'intervalles de temps avec des valeurs élevées de consigne de débit d'alimentation en air frais, supérieures à CDmoy, et d'intervalles de temps avec des valeurs faibles consigne de débit d'alimentation en air frais, inférieures à CDmoy. Par exemple, sur l'intervalle de temps séparant les instants t₂ et t₃, les valeurs de consigne de débit d'alimentation en air frais sont élevées (supérieures à CDmoy), et sur l'intervalle de temps séparant les instants t₃ et t₂+T, les valeurs de consigne de débit d'alimentation en air frais sont faibles (inférieures à CDmoy).

Pour un point de fonctionnement stabilisé du moteur, les moyens de régulation du débit d'alimentation en air frais commandent le turbocompresseur afin d'asservir ledit débit d'alimentation en air frais sur la consigne variable correspondante qui vient d'être décrite et qui appartient à une cartographie stockée dans les moyens de stockage.

Durant l'intervalle de temps séparant par exemple les instants t₃ et t₂+T, le débit d'alimentation en air frais est asservi sur des valeurs inférieures à CDmoy, c'est-à-dire assez faibles pour que les gaz d'échappement aient le temps de se réchauffer dans le dispositif catalytique qui est le siège de réactions exothermiques. Ces gaz réchauffés à des températures de l'ordre de 600 à 700°C sont alors transférés au filtre à particules, durant l'intervalle de temps séparant les instants t₂+T et t₃+T pendant lequel le débit d'alimentation en air frais est asservi sur des valeurs supérieures à CDmoy. En traversant le filtre à particules, l'énergie thermique des gaz d'échappement réchauffés va régénérer partiellement le filtre à particules par combustion des particules. Cette alternance de débits faibles et élevés permet de réchauffer des gaz d'échappement à une température telle qu'ils vont pouvoir participer à la régénération du filtre à particules en aval. Il est alors possible de régénérer un filtre à particules, même lors de roulage urbain.

Bien entendu, il n'est pas obligatoire que les variations dans le temps du débit CD soient absolument identiques à celles décrits dans l'exemple ci-dessus dans la mesure où ces variations comportent bien des parties supérieures à une moyenne CDmoy et des parties inférieures à cette moyenne.

Un point de fonctionnement du moteur reste stable, lorsque les paramètres comprenant le régime de rotation du moteur, le couple du moteur, la vitesse du véhicule, et la température des gaz d'admission du moteur ont des valeurs comprises dans des intervalles prédéterminés, qui sont fonctions du point de fonctionnement du moteur. Les intervalles prédéterminés sont stockés dans ladite cartographie comprenant la consigne de débit d'alimentation en air frais en fonction du point de fonctionnement et du temps.

Tant que le point de fonctionnement du moteur reste stable, il y a alors alternance d'intervalles de temps avec des valeurs faibles de débit d'alimentation en air frais, durant lesquelles les réactions exothermiques se déroulant dans le dispositif catalytique produisent de l'énergie thermique, et d'intervalles de temps avec des valeurs élevées de débit d'alimentation en air frais, durant lesquelles l'énergie thermique produite dans le dispositif catalytique est transférée vers le filtre à particules pour régénérer celui-ci par combustion de particules.

La période, l'amplitude et les autres caractéristiques de la consigne d'alimentation en air frais du moteur sont adaptées au point de fonctionnement du moteur.

L'invention permet d'optimiser le débit d'alimentation en air frais du moteur, et l'énergie thermique produite par les réactions exothermiques ayant lieu dans le dispositif catalytique situé en amont du filtre à particules sur la ligne d'échappement du moteur, afin de rendre possible la régénération du filtre à particules lors de roulages urbains, sur des points de fonctionnement du moteur à faible régime et faible charge.

## Revendications

1. Procédé de régénération d'un filtre à particules de véhicule automobile équipé d'un moteur à combustion, comprenant une injection de carburant retardée d'un angle de rotation du moteur fonction prédéterminée du point mort haut des pistons du moteur, **caractérisé par le fait qu'**il comprend les étapes suivantes :
- on détecte un fonctionnement du moteur sur un point de fonctionnement stable pendant au moins une durée prédéterminée, à partir des valeurs de paramètres comprenant le régime de rotation du moteur, le couple du moteur, la vitesse du véhicule, et la température des gaz d'admission du moteur ;
- on détermine une consigne de débit d'alimentation en air frais du moteur variable en fonction du temps, à partir d'une cartographie fournissant ladite consigne variable en fonction dudit point de fonctionnement stable ; et
- on asservit le débit d'alimentation en air frais du moteur sur ladite consigne ;
de façon à rendre possible la régénération pour des points de fonctionnement du moteur à faible régime et faible charge.

2. Procédé selon la revendication 1, **caractérisé par le fait qu'**un point de fonctionnement est déterminé par des valeurs de paramètres comprenant le régime de rotation du moteur, le couple du moteur, la vitesse du véhicule, et ta température des gaz d'admission du moteur.

3. Procédé selon la revendication 2, **caractérisé par le fait qu'**on définit la stabilité d'un point de fonctionnement du moteur par des intervalles de valeurs associés auxdits paramètres comprenant le régime de rotation du moteur, le couple du moteur, la vitesse du véhicule, et la température des gaz d'admission du moteur.

4. Procédé selon l'une quelconque des revendications 1 à 3, **caractérisé par le fait que** l'on stocke préalablement en mémoire une cartographie de consigne du débit d'alimentation en air frais du moteur comprenant, pour un ensemble de points de fonctionnement prédéterminés du moteur, une consigne du débit d'aümentation en air frais fonction du temps, et lesdits intervalles de valeurs associés auxdits paramètres comprenant le régime de rotation du moteur, le couple du moteur, la vitesse du véhicule, et la température des gaz d'admission du moteur.

5. Procédé selon la revendication 4, **caractérisé par le fait que** pour un point de fonctionnement stable prédéterminé, la fonction donnant la valeur de consigne du débit d'alimentation en air frais en fonction du temps est une fonction continue périodique comprenant une alternance d'intervalles de temps avec des valeurs de débit d'alimentation en air frais supérieur à la valeur moyenne du débit sur la période, et des intervalles de temps avec des valeurs de débit d'alimentation en air frais inférieur à la valeur moyenne du débit sur la période.

6. Dispositif de commande de régénération d'un filtre à particules de véhicule automobile équipé d'un moteur à combustion, comprenant des moyens pour retarder une injection de carburant d'un angle de rotation du moteur fonction prédéterminée du point mort haut des pistons du moteur, un dispositif catalytique placé sur la ligne d'échappement du moteur en amont du filtre à particules, un débitmètre mesurant le débit d'alimentation en air frais du moteur, un turbocompresseur et une unité de commande électronique comprenant des moyens de régulation du débit d'alimentation en air frais, **caractérisé par le fait que** :
- l'unité de commande électronique est adaptée pour détecter un fonctionnement du moteur sur un point de fonctionnement stable pendant au moins une durée prédéterminée à partir des valeurs de paramètres comprenant le régime de rotation du moteur, le couple du moteur, la vitesse du véhicule, et la température des gaz d'admission du moteur ;
- l'unité de commande électronique est adaptée pour déterminer une consigne de débit d'alimentation en air frais du moteur variable en fonction du temps, à partir d'une cartographie stockée dans des moyens de stockage et fournissant ladite consigne variable en fonction dudit point de fonctionnement stable ; et
- les moyens de régulation comprennent des moyens pour asservir le débit d'alimentation en air frais du moteur sur ladite consigne ;
de façon à rendre possible la régénération pour des points de fonctionnement du moteur à faible régime et faible charge.

7. Dispositif selon la revendication 6, **caractérisé par le fait que**, pour un point de fonctionnement stable, les moyens pour asservir le débit d'alimentation en air frais du moteur sur la consigne comprennent des moyens pour agir de manière périodique sur le turbocompresseur et alterner des intervalles de temps avec des valeurs de débit d'alimentation en air frais supérieur à la valeur moyenne du débit sur la période, et des intervalles de temps avec des valeurs de débit d'alimentation en air frais inférieur à la valeur moyenne du débit sur la période.

## Claims

1. Method of regenerating a particulate filter of a motor vehicle equipped with a combustion engine, involving an injection fuel that is retarded, by a predetermined crank angle past top dead centre, **characterized in that** it comprises the following steps:
- the fact that the engine has been operating at a stable operating point for at least a predetermined duration is detected on the basis of values of parameters including the engine rotational speed, the engine torque, the vehicle speed, and the temperature of the engine inlet gases;
- a time-variable engine fresh air supply flow setpoint value is determined from a map that gives said variable setpoint as a function of said stable operating point; and
- the engine fresh air supply flow is slaved to said setpoint value;
so as to allow regeneration to be performed when the engine is at low speed and light load operating points.

2. Method according to Claim 1, **characterized in that** an operating point is determined by values of parameters comprising the engine rotational speed, the engine torque, the vehicle speed and the temperature of the engine inlet gases.

3. Method according to Claim 2, **characterized in that** the stability of an engine operating point is defined by ranges of values associated with the said parameters comprising the engine rotational speed, the engine torque, the vehicle speed and the temperature of the engine inlet gases.

4. Method according to any one of Claims 1 to 3, **characterized in that** a map of the engine fresh air supply flow setpoint value comprising, for a set of predetermined engine operating points, a time-dependent fresh air supply flow setpoint value and the said ranges of values associated with the said parameters comprising the engine rotational speed, the engine torque, the vehicle speed and the temperature of the engine inlet gases is stored in memory beforehand.

5. Method according to Claim 4, **characterized in that,** for a predetermined stable operating point, the function that provides the fresh air supply flow setpoint value as a function of time is a continuous periodic function comprising an alternating sequence of time intervals with fresh air supply flow values greater than the mean value of the flow over the period, and of time intervals with fresh air supply flow values lower than the mean supply value over the period.

6. Device for controlling the regeneration of a particulate filter of a motor vehicle equipped with a combustion engine, comprising means for retarding an injection of fuel by a predetermined crank angle after top dead centre, a catalytic device positioned in the exhaust line of the engine upstream of the particulate filter, a flow meter measuring the engine fresh air supply flow, a turbocompressor and an electronic control unit comprising means of regulating the fresh air supply flow, **characterized in that:**
- the electronic control unit is designed to detect that the engine has been operating at a stable operating point for at least a predetermined duration on the basis of the values of parameters comprising the engine rotational speed, the engine torque, the vehicle speed and the temperature of the engine inlet gases;
- the electronic control unit is designed to determine a time-variable engine fresh air supply flow setpoint value from a map stored in storage means and that provide said variable setpoint value as a function of the said stable operating point; and
- the regulating means comprise means for slaving the engine fresh air supply flow to the said setpoint value;
so as to allow regeneration at engine low speed and light load operating points.

7. Device according to Claim 6, **characterized in that,** for a stable operating point, the means of slaving the engine fresh air supply flow to the setpoint value comprise means for acting periodically on the turbocompressor and alternating the intervals of time with fresh air supply flow values greater than the mean value of the flow over the period and intervals of time with fresh air supply flow values lower than the mean value of the flow over the period.

## Patentansprüche

1. Verfahren zur Regeneration eines Partikelfilters eines mit einem Verbrennungsmotor ausgestatteten Kraftfahrzeugs, eine Einspritzung von Kraftstoff beinhaltend, die um einen Drehwinkel des Motors verzögert ist, der eine vorbestimmte Funktion des oberen Totpunktes der Kolben des Motors ist, **dadurch gekennzeichnet, dass** es die folgenden Schritte aufweist:
- Erkennen eines Betriebs des Motors in einem stabilen Betriebspunkt während mindestens einer vorbestimmten Dauer, ausgehend von den Parameterwerten, welche die Drehzahl des Motors, das Drehmoment des Motors, die Geschwindigkeit des Fahrzeugs und die Temperatur der Ansauggase des Motors beinhalten;
- Bestimmen eines in Abhängigkeit von der Zeit variablen Sollwertes der Frischluftzufuhrmenge des Motors, ausgehend von einem Kennfeld, das diesen variablen Sollwert in Abhängigkeit von dem stabilen Betriebspunkt liefert; und
- Regeln der Frischluftzufuhrmenge des Motors auf den Sollwert;
derart, dass die Regeneration für Betriebspunkte des Motors mit niedriger Drehzahl und niedriger Last ermöglicht wird.

2. Verfahren nach Anspruch 1, **dadurch gekennzeichnet, dass** ein Betriebspunkt durch Parameterwerte bestimmt wird, welche die Drehzahl des Motors, das Drehmoment des Motors, die Geschwindigkeit des Fahrzeugs und die Temperatur der Ansauggase des Motors beinhalten.

3. Verfahren nach Anspruch 2, **dadurch gekennzeichnet, dass** die Stabilität eines Betriebspunktes des Motors durch Intervalle von Werten definiert wird, die mit den Parametern verknüpft sind, welche die Drehzahl des Motors, das Drehmoment des Motors, die Geschwindigkeit des Fahrzeugs und die Temperatur der Ansauggase des Motors beinhalten.

4. Verfahren nach einem der Ansprüche 1 bis 3, **dadurch gekennzeichnet, dass** im Voraus in einem Speicher ein Sollwertkennfeld der Frischluftzufuhrmenge des Motors gespeichert wird, das für eine Menge von vorbestimmten Betriebspunkten des Motors einen Sollwert der Frischluftzufuhrmenge in Abhängigkeit von der Zeit und die Intervalle von Werten beinhaltet, die mit den Parametern verknüpft sind, welche die Drehzahl des Motors, das Drehmoment des Motors, die Geschwindigkeit des Fahrzeugs und die Temperatur der Ansauggase des Motors beinhalten.

5. Verfahren nach Anspruch 4, **dadurch gekennzeichnet, dass** für einen vorbestimmten stabilen Betriebspunkt die Funktion, die den Sollwert der Frischluftzufuhrmenge in Abhängigkeit von der Zeit liefert, eine periodische stetige Funktion ist, die sich abwechselnde Zeitintervalle mit Werten der Frischluftzufuhrmenge, die größer als der Mittelwert der Zufuhrmenge über die Periode sind, und Zeitintervalle mit Werten der Frischluftzufuhrmenge, die kleiner als der Mittelwert der Zufuhrmenge über die Periode sind, aufweist.

6. Vorrichtung zur Steuerung der Regeneration eines Partikelfilters eines mit einem Verbrennungsmotor ausgestatteten Kraftfahrzeugs, welche aufweist: Mittel zum Verzögern einer Einspritzung von Kraftstoff um einen Drehwinkel des Motors, der eine vorbestimmte Funktion des oberen Totpunktes der Kolben des Motors ist, eine katalytische Vorrichtung, die in der Auspuffanlage des Motors stromaufwärts des Partikelfilters angeordnet ist, einen Durchflussmengenmesser, der die Frischluftzufuhrmenge des Motors misst, einen Turbokompressor und eine elektronische Steuereinheit, die Mittel zur Regelung der Frischluftzufuhrmenge aufweist, **dadurch gekennzeichnet, dass:**
- die elektronische Steuereinheit dazu eingerichtet ist, einen Betrieb des Motors in einem stabilen Betriebspunkt während mindestens einer vorbestimmten Dauer zu erkennen, ausgehend von den Parameterwerten, welche die Drehzahl des Motors, das Drehmoment des Motors, die Geschwindigkeit des Fahrzeugs und die Temperatur der Ansauggase des Motors beinhalten;
- die elektronische Steuereinheit dazu eingerichtet ist, einen in Abhängigkeit von der Zeit variablen Sollwert der Frischluftzufuhrmenge des Motors zu bestimmen, ausgehend von einem Kennfeld, das in Speichermitteln gespeichert ist und diesen variablen Sollwert in Abhängigkeit von dem stabilen Betriebspunkt liefert; und
- die Mittel zur Regelung Mittel zum Regeln der Frischluftzufuhrmenge des Motors auf den Sollwert aufweisen;
derart, dass die Regeneration für Betriebspunkte des Motors mit niedriger Drehzahl und niedriger Last ermöglicht wird.

7. Vorrichtung nach Anspruch 6, **dadurch gekennzeichnet, dass** für einen stabilen Betriebspunkt die Mittel zum Regeln der Frischluftzufuhrmenge des Motors auf den Sollwert Mittel aufweisen, um auf periodische Art und Weise auf den Turbokompressor einzuwirken und abwechselnd Zeitintervalle mit Werten der Frischluftzufuhrmenge, die größer als der Mittelwert der Zufuhrmenge über die Periode sind, und zeitintervalle mit Werten der Frischluftzufuhrmenge, die kleiner als der Mittelwert der Zufuhrmenge über die Periode sind, zu bewirken.
